# EUROPÄISCHE PATENTSCHRIFT

(11) **EP 1 269 859 B1**
(45) Veröffentlichungstag und Bekanntmachung des Hinweises auf die Patenterteilung: **15.02.2006**
(21) Anmeldenummer: 02013931.7
(22) Anmeldetag: 24.06.2002
(51) Int. Cl.: A23L 1/30, A23L 1/305

(54) **Verwendung von mittelkettigen Triglyceriden zur Prävention und Therapie von Adipositas**
Use of medium chain triglycerides for prevention and therapy of obesity
Utilisation des triglycerides comprenant des acides gras de longeur de chaine moyenne pour la prévention et la thérapie adiposité

(30) Priorität: 25.06.2001 DE 10130491
(43) Veröffentlichungstag der Anmeldung: 02.01.2003
(73) Patentinhaber: HEIRLER, Horst, D-82237 Wörthsee (DE)
(72) Erfinder: Kuzela, Lubomir, Doc. MUDr., 140 00 Prag (CZ); Feldheim, Walter, Prof. Dr., 24119 Kronshagen (DE)
(74) Vertreter: Vossius & Partner

(56) Entgegenhaltungen:
- EP-A- 0 198 804
- EP-A- 0 376 628
- US-A- 4 678 807
- DATABASE BIOSIS [Online] BIOSCIENCES INFORMATION SERVICE, PHILADELPHIA, PA, US; April 1998 (1998-04) BINNERT CHRISTOPHE ET AL: "Influence of human obesity on the metabolic fate of dietary long- and medium-chain triacylglycerols" Database accession no. PREV199800231975 XP002264421 & AMERICAN JOURNAL OF CLINICAL NUTRITION, Bd. 67, Nr. 4, April 1998 (1998-04), Seiten 595-601, ISSN: 0002-9165
- DATABASE BIOSIS [Online] BIOSCIENCES INFORMATION SERVICE, PHILADELPHIA, PA, US; 1996 BACH ANDRE C ET AL: "The usefulness of dietary medium-chain triglycerides in body weight control: Fact or fancy?" Database accession no. PREV199699007901 XP002264422 & JOURNAL OF LIPID RESEARCH, Bd. 37, Nr. 4, 1996, Seiten 708-726, ISSN: 0022-2275
- DATABASE BIOSIS [Online] BIOSCIENCES INFORMATION SERVICE, PHILADELPHIA, PA, US; Dezember 2000 (2000-12) SIMON E ET AL: "Effects of medium-chain fatty acids on body composition and protein metabolism in overweight rats" Database accession no. PREV200100226890 XP002264423 & JOURNAL OF PHYSIOLOGY AND BIOCHEMISTRY, Bd. 56, Nr. 4, Dezember 2000 (2000-12), Seiten 337-346, ISSN: 1138-7548
- BACH A C ET AL: "MEDIUM-CHAIN TRIGLYCERIDES: AN UPDATE" AMERICAN JOURNAL OF CLINICAL NUTRITION, BETHESDA,MD, US, Bd. 36, November 1982 (1982-11), Seiten 950-962, XP000856308 ISSN: 0002-9165

## Beschreibung

Die vorliegende Erfindung betrifft die Verwendung von mittelkettigen Triglyceriden (MCT) oder einer diese enthaltenden Zusammensetzung, z.B. ein diätetisches Lebensmittel, zur Prävention oder Therapie von Übergewicht oder Adipositas. Diese Zusammensetzung enthält vorzugsweise außerdem langkettige essentielle Triglyceriden, vorzugsweise α-Linolsäure und/oder α-Linolensäure sowie gegebenenfalls weitere Zutaten und/oder Zusatzstoffe.

Das größte Ernährungsproblem in den wohlhabenden Industrienationen ist die Überernährung. Die ständig steigende Zahl von Übergewichtigen und Adipösen, darunter ein erheblicher Anteil an Kindern und Jugendlichen, ist wegen der sich hieraus ableitenden Zunahme an emährungsabhängigen Krankheiten bedenklich. Übergewicht ist ein Risikofaktor für Krankheiten des Stütz- und Bewegungsapparats, Hypertonie (4-faches Risiko), Diabetes mellitus Typ 2 (6-faches Risiko), Herzinfarkt (4-faches Risiko), Brustkrebs (3-faches Risiko), Gallensteine (10-faches Risiko), Gicht u.a.

Die Ursachen für die Überernährung liegen in einer zu hohen Aufnahme an Nahrungsenergie, die über dem täglichen Energiebedarf liegt. Veränderte Ernährungsgewohnheiten führen zu einer höheren Energiedichte der Kost durch einen höheren Anteil an Fetten und verminderter Aufnahme von Kohlenhydraten. Außerdem ist der Energiebedarf kontinuierlich gesunken, da die im Beruf oder in der Freizeit als körperliche Aktivität verbrauchte Energie abgenommen hat.

Ein brauchbares Konzept, das die tägliche Situation grundlegend verändern könnte, fehlt bisher. Eine zu starke Einschränkung der Nahrungsaufnahme über längere Zeit wird nicht akzeptiert, denn Nahrung bedeutet Lebensqualität, ist ständig zugänglich und preiswert erhältlich. Auch die Umstellung der Emährungsweise durch eine Rückkehr zu einem höheren Anteil an pflanzlichen Lebensmitteln in der Kost wird bisher abgelehnt.

Auch die bisherigen Therapien von Übergewichtigen bzw. Adipositas sind nicht zufriedenstellend und weisen eine Reihe von Nebenwirkungen auf. So werden als bisherige Therapieformen die unterschiedlichsten Diäten mit z.T. extremen Nährstoffrelationen und Medikamente mit Nebenwirkungen angeboten. Diäten erfordern entsprechendes Wissen und beim stärkeren Abweichen vom Standard ein höheres Durchhaltevermögen und sichern vielfach nicht, vor allem wenn sie für längere Zeit eingesetzt werden, eine ausreichende Nährstoffzufuhr. Besonders wenn die Fettzufuhr stark oder sogar extrem stark eingeschränkt wird, ist die Versorgung mit den fettlöslichen Vitaminen und wichtigen Nährstoffen wie Prostaglandinen und Immunoglobulinen aus essentiellen Fettsäuren nicht gesichert, und es wird die Rolle des Fettes im Gefüge des Stoffwechsels, z.B. bei der Kalziumresorption und der Serotoninsynthese und -ausschüttung nicht beachtet. Als Nebenwirkungen bei Medikamenten sind Steatorrhoe, Flatulenz, Diarrhoe und Blutdruckanstieg bekannt.

Jedenfalls wäre eine Prävention/Behandlung durch entsprechend abgestimmte Nahrungsmittel einer medikamentösen Therapie aufgrund der damit verbundenen Kosten und Nebenwirkungen vorzuziehen.

EP-198 804 offenbart diätetische, Gemische aus Leinöl und Sojaöl.

Der vorliegenden Erfindung liegt somit das technische Problem zugrunde, Mittel für die Behandlung/Prävention von Übergewicht bzw. Adipositas bereitzustellen, die die vorstehend diskutierten Nachteile nicht aufweisen.

Die Lösung dieses technischen Problems erfolgt durch die Bereitstellung der in den Ansprüchen gekennzeichneten Ausführungsformen.

In einer breit angelegten, in den nachfolgenden Beispielen beschriebenen Studie, an der Versuchspersonen zwei kontrollierte Kostproben ad libitum in drei Mahlzeiten über den Tag verteilt erhielten, wobei sich diese Kostproben hinsichtlich des Gehalts an mittelkettigen Triglyceriden (MCT) unterschieden, konnte gezeigt werden, daß diese Fettsäuren zur Prävention bzw. Therapie von Übergewicht und Adipositas geeignet sind. Aus dieser Studie lassen sich zusammengefaßt die folgenden Schlußfolgerungen ziehen:
1. Bei normalgewichtigen Personen kann beim Verzehr MCT-haltiger Lebensmittel (im Vergleich zu langkettigen Fettsäuren (LCT)-enthaltenden Produkten) mehr Nahrungsenergie zugeführt werden, ohne daß es zu einer Erhöhung des Körpergewichts kommt. Stärkerer Einbezug MCT-haltiger Lebensmittel in die Kost kann also bei Normalgewichtigen als prophylaktische Maßnahme gegen Übergewicht verwendet werden
2. Bei Übergewichtigen, die mit einer Reduktionskost (z.B. 1200 kcal/Tag) das Gewicht reduzieren wollen, können MCT-haltige Lebensmittel das Durchhaltevermögen - auch durch mehr Fett als Geschmacksträger - steigern, da trotz erhöhter Energieaufnahme eine weitere Abnahme des Körpergewichts erfolgt und damit bei Übergewichtigen als therapeutische Maßnahme sinnvoll erscheint.
3. Hieraus ergibt sich die überraschende Möglichkeit für die Verwendung von MCT-Lebensmitteln für Normalgewichtige und Übergewichtige als Bestandteile von Normalkost bzw. Reduktionskost.

Somit betrifft die vorliegende Erfindung die Verwendung von mittelkettigen Triglyceriden oder einer mittelkettige Triglyceride enthaltenden Zusammensetzung, z.B. als diätetisches Lebensmittel, zur Prävention oder Therapie von Übergewicht oder Adipositas.

Der hier verwendete Ausdruck "mittelkettige Triglyceride" betrifft Triglyceride mit einem im wesentlichen nahezu ausschließlichen Gehalt an Caprylsäure (C8:0) und/oder Caprinsäure (C10:0) entsprechend der üblichen chemischen Nomenklatur.

Der Fachmann kennt Quellen für mittelkettige Triglyceride, vorzugsweise Kokosnußöl oder Palmkernöl.

Die ausschließliche Verwendung von MCT-Ölen als Kostbeständteil ist begrenzt. Daher empfiehlt sich die Verabreichung der MCT's in Form MCT-haltiger Lebensmittel, z.B. Margarine, so daß sich für den Verbraucher viele Möglichkeiten ergeben, MCT-haltige Lebensmittel anstelle von LCT-haltigen Lebensmittel zu verwenden.

Zur Therapie/Prävention von Übergewicht bzw. Adipositas werden die mittelkettigen Triglyceride bzw. die diese enthaltende Zusammensetzung vorzugsweise in Form von dem Verbraucher bekannten Lebensmitteln, gegebenenfalls mit weiteren Zusätzen, wie z.B. essentiellen Triglyceriden oder entsprechenden Zusammensetzungen anstelle von Diäten ohne mittelkettige Triglyceride oder Medikamenten angeboten.

Bei einer starken Reduktion der LCT's in der Kost ist zu bedenken, daß mit diesen Fetten normalerweise auch essentielle Triglyceride zugeführt werden. Die MCT-Produkte sollten daher eine ausreichende Menge an diesen lebensnotwendigen Fettsäuren enthalten. Die Resorption der fettlöslichen Vitamine ist gleichfalls vom LCT-Gehalt der Kost abhängig. Auch aus diesem Grunde sollten geeignete Produkte mit MCT eine Mindestmenge von LCT enthalten.

In einer bevorzugten Ausführungsform der erfindungsgemäßen Verwendung enthält die Zusammensetzung somit in der Fettphase (a) 70 bis 90% mittelkettige Triglyceride, (b) α-Linolsäure und/oder (c) α-Linolensäure.

Noch mehr bevorzugt ist eine Ausführungsform, in der die Fettphase der Zusammensetzung außerdem γ-Linolensäure enthält, wobei ein Gehalt zwischen 1 und 2,5% am meisten bevorzugt ist.

In einer weiteren bevorzugten Ausführungsform beträgt der Gehalt an α-Linolsäure 3,8 bis 13,4 %.

In einer weiteren bevorzugten Ausführungsform enthält die Zusammensetzung 3 bis 8 % α-Linolensäure.

In noch einer weiteren bevorzugten Ausführungsform beträgt der Gehalt an gesättigten langkettigen Triglyceriden höchstens 2,5 %.

Die in einer Menge von 70 bis 90 % in der Fettphase der Zusammensetzung für die erfindungsgemäße Verwendung enthaltenen mittelkettigen Triglyceride sind vorzugsweise Caprylsäure und Caprinsäure.

Die in einer Menge von 0,9 bis 2,5 % in der Zusammensetzung für die erfindungsgemäße Verwendung enthaltenen gesättigten langkettigen Triglyceride stammen vorzugsweise zu 0,5 bis 1,5 % aus Safloröl, zu 0,3 bis 0,7 % aus Leinöl und zu 0,1 bis 0,3 % aus einem Emulgator, beispielsweise Lecidan.

Die in einer Menge von 3,8 bis 13,4 % in der Zusammensetzung enthaltene α-Linolsäure stammt vorzugsweise zu 3 bis 11 % aus Safloröl und zu 0,8 bis 2,4 % aus Leinöl. Leinöl stellt ebenfalls eine bevorzugte Quelle für die in einer Menge von 3 bis 8 % enthaltene α-Linolensäure dar. Eine Quelle für die in einer Menge von 1 bis 2,5 % in der Zusmmensetzung enthaltene γ-Linolensäure ist vorzugsweise Borretschöl.

Die in einer Menge von 1,3 bis 3,6 % in der Zusammensetzung zur erfindungsgemäßen Verwendung enthaltenen Ölsäuren stammen vorzugsweise zu 0,5 bis 1,5 % aus Safloröl und zu 0,8 bis 2,1 % aus Leinöl.

In einer besonders bevorzugten Ausführungsform hat die Fettphase der Zusammensetzung folgende Zusammensetzung:

| | |
|---|---|
| Mittelkettige Triglyceride | 70-90% |
| Gesättigte, langkettige Triglyceride | 0,9-2,5% |
| α-Linolsäure | 3,8-13,4% |
| α-Linolensäure | 3-8% |
| γ-Linolensäure | 1-2,5% |
| Ölsäure | 1,3-3,6% |

In einer noch mehr bevorzugten Ausführungsform hat die Fettphase der Zusammenesetzung folgende Zusammensetzung:

| | |
|---|---|
| Mittelkettige Triglyceride | 80% |
| Gesättigte, langkettige Triglyceride | ca. 1,6% |
| α-Linolsäure | ca. 9% |
| α-Linolensäure | ca. 5,4% |
| γ-Linolensäure | ca. 1,8% |
| Ölsäure | ca. 2,2% |

In einer weiteren bevorzugten Ausführungsform enthält die Zusammensetzung für die erfindungsgemäße Verwendung zusätzlich zu den oben angegebenen Triglyceriden weiterhin Emulgatoren, fettlösliche Vitamine, β-Karotin und/oder Lecithin. Als Emulgator kann beispielsweise Lecidan SB (Emulgator aus Mono- und Diglyceriden sowie Lecithin) in einer Konzentration von 0,5 % verwendet werden. In einer besonders bevorzugten Ausführungsform enthält die Fettphase der Zusammensetzung die Vitamine A, D und/oder E.

Vorzugsweise beträgt die Fettphase der Zusammensetzung für die erfindungsgemäße Verwendung 80 % und die Wasserphase 20 %, wobei in einer bevorzugten Ausführungsform die Wasserphase Vitamin C, Folsäure und/oder Vitamin B12 enthält.

Bevorzugte Vitaminmengen pro 100 g Fett in der Margarine sind 0 bis 2 mg Vitamin A, 0 bis 300 ng β-Carotin, 0 bis 50 µg Vitamin D, 0 bis 100 mg Gesamttocopherol, 0 bis 1 µg Vitamin B12, 0 bis 5 mg Folsäure und 0 bis 75 mg Vitamin C. Durch den Zusatz von Vitamin C verbessert sich die Calcium- und Eisenresorption.

### Beispiel 1: Verabreichung der mittelkettigen Triglyceride in Form von Margarine

Die mittelkettige Triglyceride werden zweckmäßigerweise mit weiteren Bestandteilen bevorzugt in Form einer Margarine in den Verkehr gebracht. Diese enthält ca. 18 Gew.-% Wasser, mindestens 80 Gew.-% Fett und ca. 2 Gew.-% Trockensubstanz. Ca. 20 % stellen die Wasserphase und ca. 80 % die Fettphase dar.

### Herstellung

1. Die wasserlöslichen Komponenten (Vitamin B12, Vitamin C, Folsäure, Aroma) werden im Wasser gelöst und vermischt. Anschließend wird auf 60 - 80°C erwärmt.
2. Die Fettkomponenten mittelkettige Triglyceride werden geschmolzen und vermischt ("Fettkomposition).
3. 1 Teil Emulgator SB wird mit 5 Teilen "Fettkomposition" von Schritt 2 auf 65°C erwärmt und klar geschmolzen, dann diese Mischung zur gesamten "Fettkomposition" gegeben und vermischt.
4. Fettlösliche Komponenten (Vit. E, Vit. D 3, Vit. A-Palmitat, β-Carotin) werden darin aufgelöst und vermischt.
5. Fettphase und Wasserphase werden bei 40 bis 50°C unter Rühren so gemischt, daß eine Emulsion vom Typ W/O (Wasser in Öl) gebildet wird.
6. Die entstandene W/O-Emulsion wird in einem Schabewärmeaustauscher (Rohrkühler) in der für Margarine bekannten Weise kristallisiert und geknetet, so daß ein streichfähiges Produkt erhalten wird.

Der Tagesbedarf der mittkettige Triglyceride enthaltenden Margarine ist variabel, muß sich jedoch nach dem jeweiligen Befund richten. Bei guter Verträglichkeit können 50 bis 70 g Diätmargarine pro Tag von dein Patienten zu sich genommen werden.

### Beispiel 2: Untersuchung zum Nachweis der vorteilhaften Wirkung von mittelkettigen Triglyceriden bei Übergewicht bzw. Adipositas

### (A) Material und Methoden

An der Studie nahmen 35 gesunde Studentinnen der Prager Karls-Universität im Alter von 19-24, Jahren und einem Body-Mass-Index zwischen 19 und 25 (Normalbereich) teil. Sie erhielten zwei kontrollierte Kostformen ad libitum in drei Mahlzeiten über den Tag verteilt blind (ohne Kenntnis von deren Unterschied) im Cross-over-Design für je vier Wochen mit einer Washout-Periode von zwei Wochen zwischen den Versuchsperioden. Die Teilnehmerinnen wurden täglich gewogen.

Die Studie wurde von der Ethic Kommission der Med. Fak. genehmigt. Schriftliche Einwilligungen der Probandinnen zur Teilnahme an der Studie lagen vor, sie enthielt die Verpflichtung, außer den angebotenen Lebensmitteln keine anderen fetthaltigen Lebensmittel zu verzehren. Getränke waren erlaubt und mußten im Tagesprotokoll angegeben werden.

Die beiden Kostformen unterschieden sich in der Art der Zusammensetzung der Nahrungsfette. Probandinnen der Gruppe A (n= 18) erhielten zuerst die Kostform mit LCT-haltigen Lipiden für 4 Wochen. Nach der zweiwöchigen Pause mit gewohnter Ernährung wurde die Kostform mit MCT-haltigen Lipiden für 4 Wochen verzehrt. Die zum Verzehr der MCT-Fette verwendeten Lebensmittel zeigt die Tabelle 1. Probandinnen der Gruppe B erhielten zu den gleichen Zeiten, jedoch in umgekehrter Reihenfolge die beiden Kostformen.

| **Tabelle 1** | **Anteile an mittelkettigen und langkettigen Triglyceriden (MCT/LCT) in den speziellen Lebensmitteln *) (in 100 g bzw. ml)** | | | |
|---|---|---|---|---|
| | MCT g | MCT % Gesamtfett | LCT g | LCT % Gesamtfett |
| Margarine | 66 | 83 | 14 | 17 |
| Speiseöl | 77 | 77 | 23 | 23 |
| Schmelzecken | 19 | 71 | 7,5 | 29 |
| Schokocreme | 35 | 71 | 14 | 29 |
| Putencreme | 16 | 68 | 8 | 32 |
| Mayonnaise | 40 | 77 | 12 | 23 |
| Müsliriegel (4 Sorten) | 14 | 85 | 2 | 15 |

| | | | | |
|---|---|---|---|---|
| MCT = mittelkettige, gesättigte Triglyceride | | | | |
| LCT = langkettige, gesättigte und einfach/mehrfach ungesättigte Triglyceride | | | | |
| *) Hersteller: BASIS Gesellschaft für Diätetik und Ernährung mbH, München | | | | |

Die Speisenzubereiturig und das Abwiegen der Speisen und Lebensmittel erfolgte unter Aufsicht von Diätassistentinnen in der Diätküche der Karls-Universität, das Nlittagessen (ohne Fettzusatz) wurde in der Diätküche der Karls-Universität zubereitet. Die Mittagsmahlzeit wurde gemeinsam eingenommen, Lebensmittel für Abendbrot und Frühstück wurden mitgegeben. Für jeden Tag wurde ein Ernährungsprotokoll angelegt. Die ausgegebenen Speisen und Lebensmittel wurden gewogen, nicht verzehrte Nahrung wurde zurückgewogen. Aus den tatsächlich verzehrten Nahrungsmengen wurde an Hand von amtlichen Lebensmitteltabellen und bei den speziellen MCT-Lebensmitteln nach Herstellerangaben der Tagesverbrauch an Protein, Kohlenhydraten, Fetten (getrennt nach LCT und MCT - siehe Tab. 3-9) sowie Cholesterin, Calcium, Natrium, Kalium, Phosphor, Vitamin C und Ballaststoffen berechnet.

Beispiele von Verzehrsprotokollen für die LCT- und MCT/LCT-Kostformen zeigen die Tabellen 3-6. Die Kost wurde der landesüblichen Emährungsweise angepasst, um eine möglichst leicht in die Praxis umsetzbare Ernährungsform zu erhalten. Typische Lebensmittel und Speisen zeigt die nachstehende Tabelle 2.

| **Tabelle 2** | **Typische Lebensmittel u. Speisen beim Verzehr während der Studie** |
|---|---|
| Frühstück | Kipferl, Mischbrot, Brötchen, Margarine, Schokocreme/Nutella, Marmelade, Geflügelcreme, Schmelzkäse, Joghurt, Kaffee/Tee, Apfel |
| Mittagessen | verschiedene Suppen (ÖI), Kartoffelbrei (ÖI), Nudeln (ÖI), Knödel, Soße (ÖI), gekochtes Rindfleisch, Schweinefleisch, Geflügel, Gemüse, Krautsalat, Tomatensalat, Apfelsine |
| Abendbrot | Kipferl, Mischbrot, Brötchen, Geflügelcreme, Schmelzkäse, Margarine, Gurkensalat, Gemüse-Salat mit Mayonnaise, Obst, Bier/Saft. |

| **Tabelle 3** | | **Beispiel für ein Tagesprotokoll MCT/ILCT-Kost Tagesmenü vom 29.03. Probandin K P, Gruppe B** | | | | | | |
|---|---|---|---|---|---|---|---|---|
| Lebensmittel | | Menge g/ml | KH g | Protein g | Fett | | Energie | |
| | | | | | g MCT | g LCT | kJ | kcal |
| Frühstück | | | | | | | | |
| | Kipferl (3) | 138 | | | | | | |
| | Joghurt | 150 | | | | | | |
| | Putencreme | 25 | | | | | | |
| | Margarine | 10 | | | | | | |
| | | | 95,8 | 21,4 | 14,0 | 1,5 | 2557 | 611 |

| Mittagessen | | | | | | | | |
|---|---|---|---|---|---|---|---|---|
| | Gemüsesuppe m. Grieß | 300 | | | | | | |
| | Rindfleisch, gek. | 40 | | | | | | |
| | Dillsoße | 130 | | | | | | |
| | Semmelknödel | 130 | | | | | | |
| | Speiseöl | 20 | | | | | | |
| | | | 101,5 | 35,5 | 25,0 | 10,0 | 3643 | 870 |

| Abendbrot | | | | | | | | |
|---|---|---|---|---|---|---|---|---|
| | Kipferl (2) | 92 | | | | | | |
| | Schokocreme | 10 | | | | | | |
| | Margarine | 5 | | | | | | |
| | | | 59,8 | 9,1 | 7,0. | 2,5 | 1528 | 365 |
| **Summen** | | | **257,1** | **66,0** | **46,0** | **14,0** | **7728** | **1846** |
| **Fettaufteilung in %** | | | | | **76,7** | **23,3** | | |

| **Tabelle 4** | | **Beispiel für ein Tagesprotokoll LCT/Kost Tagesmenü vom 29.03. Probandin M M, Gruppe A** | | | | | | |
|---|---|---|---|---|---|---|---|---|
| Lebensmittel | | Menge glmi | KH g | Protein g | Fett | | Energie | |
| | | | | | g MCT | g LCT | kJ | kcal |
| Frühstück | | | | | | | | |
| | Kipferl (3) | 138 | | | | | | |
| | Geflügelpastete | 50 | | | | | | |
| | Margarine | 10 | | | | | | |
| | | | 1 | 17,0 | | 11,9 | 2227 | 532 |

| Mittagessen | | | | | | | | |
|---|---|---|---|---|---|---|---|---|
| | Gemüsesuppe m. | 300 | | | | | | |
| | Grieß | | | | | | | |
| | Rindfleisch, gek. | 40 | | | | | | |
| | Dillsoße | 120 | | | | | | |
| | Semmelknödel | 56 | | | | | | |
| | Speiseöl | 15 | | | | | | |
| | | | 57,3 | 28,4 | | 29,5 | 2547 | 608 |

| Abendbrot | | | | | | | | |
|---|---|---|---|---|---|---|---|---|
| | Kipferl (3) | 138 | | | | | | |
| | Margarine | 5 | | | | | | |
| | Nutella | 10 | | | | | | |
| | | | 90,2 | 13,2 | | 8,2 | 2042 | 488 |
| **Summen** | | | **235,6** | **58,6** | | **49,6** | **6816** | **1628** |

| **Tabelle 5** | | **Beispiel für ein Tagesprotokoll LCT/MCT-Kost Tagesmenü vom 10.05. Probandin M M, Gruppe A** | | | | | | |
|---|---|---|---|---|---|---|---|---|
| Lebensmittel | | Menge g/ml | KH g | Protein g | Fett | | Energie | |
| | | | | | g MCT | g LCT | kJ | kcal |
| Frühstück | | | | | | | | |
| | Putencreme | 25 | | | | | | |
| | Joghurt | 150 | | | | | | |
| | Margarine | 10 | | | | | | |
| | | | 11,2 | 9,4 | 14,0 | 1,5 | 868 | 207 |

| Mittagessen | | | | | | | | |
|---|---|---|---|---|---|---|---|---|
| | Gemüse | 300 | | | | | | |
| | Rindfleisch, gek. | 40 | | | | | | |
| | Dillsoße | 200 | | | | | | |
| | Semmelknödel | 130 | | | | | | |
| | Speiseöl | 25 | | | | | | |
| | | | 109,3 | 37,1 | 25,0 | 10,0 | 4050 | 967 |

| Abendbrot | | | | | | | | |
|---|---|---|---|---|---|---|---|---|
| | Kipferl (2) | 92 | | | | | | |
| | Schokocreme | 10 | | | | | | |
| | Margarine Banane | 10 | | | | | | |
| | | 80 | | | | | | |
| | Orange | 160 | | | | | | |
| | | | 101,7 | 10,2 | 10,0 | 4,0 | 2353 | 562 |
| **Summen** | | | **222,2** | **56,7** | **49,0** | **15,5** | **7271** | **1736** |
| **Fettaufteilung in %** | | | | | **75,4** | **24,6** | | |

| **Tabelle 6** | | **Beispiel für ein Tagesprotokoll LCT-Kost** Tagesmenü vom 12.05. Probandin K P, Gruppe B | | | | | | |
|---|---|---|---|---|---|---|---|---|
| Lebensmittel | | Menge g/ml | KH g | Protein g | Fett | | Energie | |
| | | | | | g MCT | g LCT | kJ | kcal |
| Frühstück | | | | | | | | |
| | Kipferl (3) | 138 | | | | | | |
| | Joghurt | 150 | | | | | | |
| | Nutella | 20 | | | | | | |
| | Margarine | 5 | | | | | | |
| | | | 106,9 | 20,5 | | 9,1 | 2470 | 590 |

| Mittagessen | | | | | | | | |
|---|---|---|---|---|---|---|---|---|
| | Gemüsesuppe mit | 148 | | | | | | |
| | Fleisch | | | | | | | |
| | Nudeln m. Quark | 194 | | | | | | |
| | Apfelsinensaft | 250 | | | | | | |
| | Speiseöl | 12 | | | | | | |
| | | | 77,7 | 13,8 | | 23,2 | 2463 | 588 |

| Abendbrot | | | | | | | | |
|---|---|---|---|---|---|---|---|---|
| | Kipferl (2) | 92 | | | | | | |
| | Schmelzkäse | 40 | | | | | | |
| | Huhn, gegrillt | 160 | | | | | | |
| | Tomatensalat | 150 | | | | | | |
| | | | 64,5 | 54,0 | | 16,2 | 2477 | 592 |
| **Summen** | | | **249,1** | **88,3** | | **48,5** | **7410** | **1770** |

### (B) Ergebnisse und Diskussion

Bei der Auswertung der Verzehrsprotokolle zeigte sich, dass während der Perioden des Verzehrs der MCT/LCT-Kost eine höhere tägliche Fettaufnahme zu beobachten war als während des Verzehrs der LCT-Kost. Dementsprechend war auch die tägliche durchschnittliche Aufnahme an Nahrungsenergie angestiegen. Das Körpergewicht in den Gruppen blieb dagegen innerhalb der üblichen Schwankungen trotz der höheren Energiezufuhr in den MCT/LCT-Abschnitten unverändert. (siehe Tabellen 7-9)

| **Tabelle 7** | **Tägliche Fett- und Energieaufnahme und Verhalten des Körpergewichts während der Studie bei Verzehr der LCT-Kostform** | | | |
|---|---|---|---|---|
| | Fett g/Tag | Energie kJ/Tag | Körpergewicht kg | Gruppe |
| Beginn | | | 63,1 | A |
| 1. Woche | 59,6 | 8516 | 62,6 | |
| 2. Woche | 57,6 | 7965 | 62,4 | |
| 3. Woche | 56,4 | 7814 | 62,1 | |
| 4. Woche | 58,3 | 8108 | 62,3 | |
| Pause / Beginn | | | 62,5 | B |
| 5. Woche | 57,8 | 8022 | 61,8 | |
| 6. Woche | 55,8 | 7262 | 61,6 | |
| 7. Woche | 56,8 | 7431 | 61,1 | |
| 8. Woche | 57,8 | 7246 | 61,2 | |

| **Tabelle 8** | **Tägliche Fett- und Energieaufnahme und Verhalten des Körpergewichts während der Studie bei Verzehr von MCT/LCT-Kost** | | | |
|---|---|---|---|---|
| | Fett g/Tag | Energie kJ/Tag | Körpergewicht kg | Gruppe |
| Beginn | | | 62,9 | B |
| 1. Woche | 62,3 | 8374 | 63,3 | |
| 2. Woche | 69,6 | 8628 | 62,3 | |
| 3. Woche | 71,1 | 8128 | 62,0 | |
| 4. Woche | 70,2 | 8132 | 61,8 | |
| Pause / Beginn | | | 62,5 | A |
| 5. Woche | 66;1 | 8608 | 62,2 | |
| 6. Woche | 68,3 | 8552 | 62,3 | |
| 7. Woche | 67,5 | 8230 | 61,9 | |
| 8. Woche | 66,2 | 8027 | 61,8 | |

| **Tabelle 9** | | **Durchschnittliche Fett- und Energie-Aufnahme/Tag und Gewichtsverhalten im Abschnitt I (Woche 1-4) und II (Woche 5-8)** | | | | |
|---|---|---|---|---|---|---|
| Gruppe | Abschnitt | | Kostform | Fettaufnahme g *) | Energieaufn. kJ *) | Gewicht kg |
| A | I | | LCT | 57,9 | 8069 | Beginn 63,1 Ende 62,3 |
| A | II | | MCT-LCT | 67,1 | 8335 | Beginn 62,5 Ende 61,8 |
| B | I | | MCT-LCT | 70,1 | 8308 | Beginn 62,9 Ende 61,8 |
| B | II | | LCT | 56,0 | 7445 | Beginn 62,5 Ende 61,2 |

| | | | | | | |
|---|---|---|---|---|---|---|
| *) Gesamtdurchschnitt der Einzetwerte | | | | | | |

In den Kostperioden mit -MCT-Gäben war die tägliche Energieaufnahme in beiden Versuchsabschnitten (2x28 Tage) um durchschnittlich 565 kJ (60 bis 860) höher als in den Kostperioden mit LCT, ohne dass hierdurch das Körpergewicht beeinflusst wurde. Dies könnte durch einen höheren Energieverbrauch durch die Thermogenese bei MCT-Gaben erklärt werden. Trotz der höheren Energiezufuhr von ca. 15 MJ in 4 Wochen (entspricht etwa der Nahrungsenergieaufnahme von 1,5 bis 2 Tagen = "Fastentage") traten bei den Versuchspersonen keine Gewichtsunterschiede auf. In dieser Studie wurde damit erstmalig der Einfluss einer kontrollierten Ernährung mit LCT/MCT und dem Gewichtsverhalten über eine längere Zeit (für zwei Monate) untersucht und dokumentiert.

Aus dieser Studie lassen sich somit die nachstehenden Schlussfolgerungen ziehen:
1. Aus den Ergebnissen der Studie mit normalgewichtigen Personen lässt sich ableiten, dass beim Verzehr MCT-haltiger Lebensmittel (im Vergleich zu LCT-haltigen Produkten) mehr Nahrungsenergie zugeführt werden kann, ohne dass es zu einer Erhöhung des Körpergewichts kommt. Stärkerer Einbezug MCT-haltiger Lebensmittel in die Kost kann somit bei Normalgewichtigen als prophylaktische Maßnahme gegen Übergewicht verwendet werden
2. Bei Übergewichtigen, die mit einer Reduktionskost (z.B. 1200 kcal/Tag) das Gewicht reduzieren wollen, können MCT-haltige Lebensmittel das Durchhaltevermögen - auch durch mehr Fett als Geschmacksträger - steigern, da trotz erhöhter Energieaufnahme eine weitere Abnahme des Körpergewichts erfolgt und damit bei Übergewichtigen als therapeutische Maßnahme sinnvoll erscheint.
3. Hieraus ergibt sich die Möglichkeit der Verwendung von MCT-Lebensmitteln für Normalgewichtige und Übergewichtige als Bestandteile von Normalkost bzw. Reduktionskost.

## Patentansprüche

1. Verwendung von mittelkettigen Triglyceriden oder einer mittelkettige Triglyceride enthaltenden Zusammensetzung zur Herstellung eines Mittels zur Prävention oder Therapie von Übergewicht oder Adipositas, wobei die Zusammensetzung in der Fettphase enthält:
(a) 70 bis 90% mittelkettige Triglyceride,
(b) α-Linolsäure und/oder
(c) α-Linolensäure.

2. Verwendung nach Anspruch 1, wobei die Zusammensetzung in der Fettphase weiterhin γ-Linolensäure enthält.

3. Verwendung nach Anspruch 1 oder 2, wobei die Zusammensetzung 3,8 bis 13,4% α-Linolsäure enthält.

4. Verwendung nach einem der Ansprüche 1 bis 3, wobei der Gehalt an α-Linolensäure 3 bis 8% ist.

5. Verwendung nach einem der Ansprüche 1 bis 4, wobei die Zusammensetzung 1 bis 2,5% γ-Linolensäure enthält.

6. Verwendung nach einem der Ansprüche 1 bis 5, wobei der Gehalt an gesättigten, langkettigen Triglyceriden in der Zusammensetzung höchstens 2,5% beträgt.

7. Verwendung nach einem der Ansprüche 1 bis 6, wobei die Zusammensetzung in der Fettphase folgende Zusammensetzung hat:
| | |
|---|---|
| Mittelkettige Triglyceride | 70 - 90%, |
| Gesättigte, langkettige Triglyceride | 0,9 - 2,5%, |
| α-Linolsäure | 3,8 - 13,4%, |
| α-Linolensäure | 3 - 8%, |
| γ-Linolensäure | 1 - 2,5%, |
| Ölsäure | 1,3 - 3,6%. |

8. Verwendung nach Anspruch 7, wobei die Zusammensetzung in der Fettphase folgende Zusammensetzung hat:
| | |
|---|---|
| Mittelkettige Triglyceride | 80% |
| Gesättigte langkettige Triglyceride: | ca. 1,6%, |
| α-Linolsäure | ca. 9%, |
| α-Linolensäure | ca. 5,4%, |
| γ-Linolensäure | ca. 1,8%, |
| Ölsäure | ca. 2,2%. |

9. Verwendung nach einem der Ansprüche 1 bis 8, wobei die Zusammensetzung in der Fettphase außerdem Emulgatoren, fettlösliche Vitamine, B-Carotin und/oder Lecithin enthält.

10. Verwendung nach Anspruch 9, wobei die fettlöslichen Vitamine die Vitamine A, D und/oder E sind.

11. Verwendung nach einem der Ansprüche 1 bis 10, wobei die Fettphase der Zusammensetzung etwa 80% und die Wasserphase etwa 20% sind.

12. Verwendung nach Anspruch 11, wobei die Wasserphase der Zusammensetzung Vitamin C, Folsäure und/oder Vitamin B12 enthält.

## Claims

1. Use of medium-chain triglycerides or a composition containing medium-chain triglycerides for the preparation of a composition for the prevention or therapy of obesity or adiposity, wherein in the fatty phase the composition contains:
(a) 70 to 90% medium-chain triglycerides,
(b) α-linoleic acid and/or
(c) α-linolenic acid.

2. Use according to claim 1, wherein in the fatty phase the composition further contains γ-linolenic acid.

3. Use according to claim 1 or 2, wherein the composition contains 3.8 to 13.4% α-linoleic acid.

4. Use according to any one of claims 1 to 3, wherein the content of α-linolenic acid is 3 to 8%.

5. Use according to any one of claims 1 to 4, wherein the composition contains 1 to 2.5% γ-linolenic acid.

6. Use according to any one of claims 1 to 5, wherein the content of saturated long-chain triglycerides in the composition is 2.5% at the most.

7. Use according to any one of claims 1 to 6, wherein in the fatty phase the composition is composed of the following:
| | |
|---|---|
| Medium-chain triglycerides | 70 - 90%, |
| saturated long-chain triglycerides | 0.9 - 2.5%, |
| α-linoleic acid | 3.8-13.4%, |
| α-linolenic acid | 3 - 8%, |
| γ-linolenic acid | 1 - 2.5%, |
| oleic acid | 1.3 - 3.6%. |

8. Use according to claim 7, wherein in the fatty phase the composition is composed of the following:
| | |
|---|---|
| Medium-chain triglycerides | 80 %, |
| saturated long-chain triglycerides | about 1.6%, |
| α-linoleic acid | about 9%, |
| α-linolenic acid | about 5.4%, |
| γ-linolenic acid | about 1.8%, |
| oleic acid | about 2.2%. |

9. Use according to any one of claims 1 to 8, wherein in the fatty phase the composition further contains emulsifiers, liposoluble vitamins, β-carotene and/or lecithin.

10. Use according to claim 9, wherein the liposoluble vitamins are the vitamins A, D and/or E.

11. Use according to any one of claims 1 to 10, wherein the fatty phase of the composition makes up about 80% and the water phase makes up about 20%.

12. Use according to claim 11, wherein the water phase of the composition contains vitamin C, folic acid and/or vitamin B12.

## Revendications

1. Utilisation de triglycérides à chaîne moyenne ou d'une composition contenant des triglycérides à chaîne moyenne pour la fabrication d'un produit pour la prévention ou le traitement de la surcharge pondérale ou de l'obésité, dans laquelle la composition contient, dans la phase grasse :
(a) 70 à 90 % de triglycérides à chaîne moyenne,
(b) de l'acide α-linoléique et/ou
(c) de l'acide α-linolénique.

2. Utilisation selon la revendication 1, dans laquelle la composition contient en outre de l'acide γ-linolénique dans la phase grasse.

3. Utilisation selon la revendication 1 ou 2, dans laquelle la composition contient 3,8 à 13,4 % d'acide α-linoléique.

4. Utilisation selon l'une quelconque des revendications 1 à 3. dans laquelle la teneur en acide α-linolénique est de 3 à 8 %.

5. Utilisation selon l'une quelconque des revendications 1 à 4. dans laquelle la composition contient de 1 à 2.5 % d'acide γ-linolénique.

6. Utilisation selon l'une quelconque des revendications 1 à 5, dans laquelle la teneur en triglycérides à chaîne longue saturée dans la composition est de 2,5 % au maximum.

7. Utilisation selon l'une quelconque des revendications 1 à 6, dans laquelle la composition dans la phase grasse a la composition suivante :
| | |
|---|---|
| Triglycérides à chaîne moyenne | 70-90% |
| Triglycérides à chaîne longue saturée | 0.9 - 2,5 % |
| Acide α-linoléique | 3,8- 13,4 % |
| Acide α-linolénique | 3-8% |
| Acide γ-linolénique | 1 - 2,5 % |
| Acide oléique | 1,3 - 3,6 %. |

8. Utilisation selon la revendication 7, dans laquelle la composition dans la phase grasse a la composition suivante :
| | |
|---|---|
| Glycérides à chaîne moyenne | 80 % |
| Triglycérides à chaîne longue saturée | environ 1,6 % |
| Acide α-linoléique | environ 9 % |
| Acide α-linolénique | environ 5,4 % |
| Acide γ-linolénique | environ 1,8% |
| Acide oléique | environ 2,2 %. |

9. Utilisation selon l'une quelconque des revendications 1 à 8. dans laquelle la composition dans la phase grasse contient en outre des émulsifiants, des vitamines liposolubles, du β-carotène et/ou de la lécithine.

10. Utilisation selon la revendication 9, dans laquelle les vitamines liposolubles sont la vitamine A, D et/ou E.

11. Utilisation selon l'une quelconque des revendications 1 à 10, dans laquelle la phase grasse de la composition représente 80 % environ et la phase aqueuse 20 % environ.

12. Utilisation selon la revendication 11. dans laquelle la phase aqueuse de la composition contient de la vitamine C, de l'acide folique et/ou de la vitamine B12.
